Europäisches Patentamt

European Patent Office

Office européen des brevets

(11) Publication number: **0 277 378**
**A1**

## (12) EUROPEAN PATENT APPLICATION

(21) Application number: **87202462.5**

(22) Date of filing: **09.12.87**

(51) Int. Cl.⁴: **H04N 5/335**

(30) Priority: **11.12.86 NL 8603151**

(43) Date of publication of application:
**10.08.88 Bulletin 88/32**

(84) Designated Contracting States:
**BE CH DE FR GB IT LI NL**

(71) Applicant: **N.V. Philips' Gloeilampenfabrieken**
**Groenewoudseweg 1**
**NL-5621 BA Eindhoven(NL)**

(72) Inventor: **de Vaan, Adrianus Johannes S. M.**
**c/o INT. OCTROOIBUREAU B.V. Prof.**
**Holstlaan 6**
**NL-5656 AA Eindhoven(NL)**
Inventor: **Centen, Petrus Gijsbertus Maria**
**c/o INT. OCTROOIBUREAU B.V. Prof.**
**Holstlaan 6**
**NL-5656 AA Eindhoven(NL)**

(74) Representative: **Houbiers, Ernest Emile Marie**
**Gerlach et al**
**INTERNATIONAAL OCTROOIBUREAU B.V.**
**Prof. Holstlaan 6**
**NL-5656 AA Eindhoven(NL)**

(54) **Camera.**

(57) The invention relates to a camera comprising a charge-coupled imager sensor device provided with a shutter in the form of an LCD cell, which serves to suppress smear effects and is operated in a special pulse mode. In a first embodiment, at the beginning of the frame period a pulse is supplied to the LCD cell, as a result of which the latter is set to a transparent state and triggers during the remaining part of the frame period to the non-transparent state. During the last 0.5 msec, the cell is so impervious that the image information can be transported to the storage practically without smear. In a second embodiment, at the end of the frame period a pulse is supplied, as a result of which the cell is practically non-tranparent so that the image information can be rapidly transported to the storage, after which the cell triggers during the next frame period to the transparent state.

FIG.2

FIG.4a

FIG.4b

## "Camera"

The invention relates to a camera comprising a charge-coupled image sensor device, more particularly, but not exclusively a charge-coupled device of the frame transfer type, having an image sensor section, by which an image projected onto it during a frame period is converted into a pattern of charge packets, as well as a storage section for storing the charge packets formed in the image sensor section during the frame period, wherein the pattern of charge packets can be transferred from the image sensor section to the storage section in a transfer period which is short as compared with the frame period.

Such cameras and charge-coupled image sensor devices suitable for use in such cameras are well known. Charge-coupled image sensors of the frame transfer type are composed of a system of adjacent parallel charge-coupled devices extending parallel to the column direction of the collected image. The upper half of this system is photo-sensitive and constitutes the image sensor section, while the lower half, the storage section, is generally screened from incident radiation by a screening layer of, for example, Al. Due to the transport from the image sensor section to the storage section, to each charge packet charge will be added which is associated with the image points in the relevant column other than the image point associated with this charge packet. When the image is displayed again, the effect described here will give rise to blurring, which is generally designated in literature as "smear" and which may be very annoying under given circumstances. For example, a local high brightness due to "smear" may lead to the relevant column becoming partially or even entirely white.

In order to obviate this problem, it has already been suggested to arrange in front of the image sensor device a shutter, such as, for example, described in the publication "Picture Recording Device" in "Patent Abstracts of Japan", Vol. E 202 (7 October 1983), p. 133, No. 58-116877.

The use of mechanical shutters often also gives rise to problems. Such shutters are mostly not shock-proof and their life is moreover often not sufficiently long.

The invention has inter alia for its object to provide a camera of the kind described in the opening paragraph, in which the problems described above are avoided entirely or only in part.

For this purpose, according to the invention, a camera of the kind described in the opening paragraph is characterized in that the camera has a shutter for blocking the supply of radiation in the transfer period, this shutter comprising a liquid crystal cell or a magneto-optical cell provided with control means by which a voltage can be supplied at the beginning of a frame period, as a result of which the cell is set to a transparent state and triggers during the remaining part of the frame period to the nontransparent state and is at least substantially non-transparent during the transfer period. When using a liquid crystal cell, termed hereinafter briefly LCD cell, the use of mechanical shutters and the inherent problems can be avoided. Although LCD cells generally have too long switching times in relation to the periods for which image sensors are operated, the use of LCD cells as shutters is nevertheless possible for CCD image sensors due to the triggering process described herein. The invention is based on the recognition of the fact that the most important requirement to be imposed on the shutter is that the transmission is a minimum when the charge pattern is transferred from the sensor section to the storage section. During the remaining part of the frame period, the transmission must be high but because of the integration mode it need not necessarily be constant.

The invention will be described more fully with reference to an embodiment and the accompanying diagrammatic drawing, in which:

Fig. 1 is a diagrammatic plan view of a charge-coupled image sensor device of the FT type;

Fig. 2 shows the block circuit diagram of a camera according to the invention,

Fig. 3 shows a cross-section of an LCD shutter for use in this camera;

Fig. 4a shows the diagram of clock voltages to be applied to this shutter as a function of the time $t$;

Fig. 4b shows the transmission T obtained at these clock voltages as a function of the time $t$.

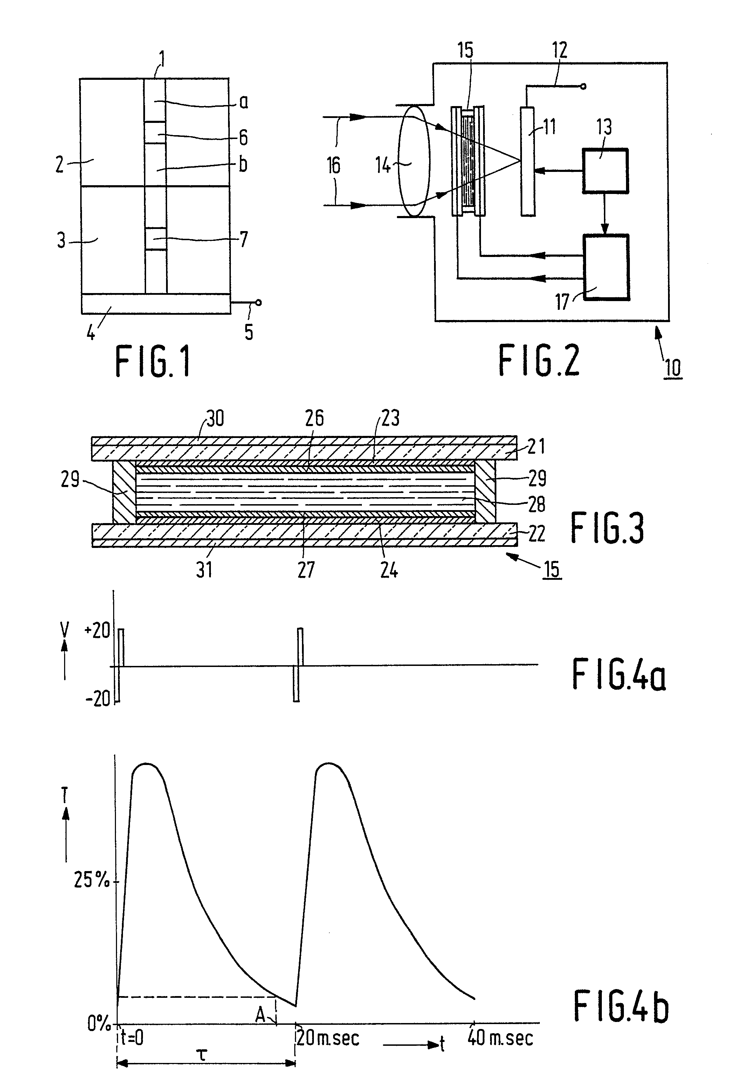

Fig. 1 shows the circuit diagram of a charge-coupled image sensor for use in a camera acording to the invention. The sensor is of the frame transfer type or FT type, which is described in many publications in literature. For a detailed description of a sensor, reference may therefore be made to the literature, for example to the book "Charge Transfer Devices" by C.H. Séquin and H. Tompsett, Academic Press, New York 1975, more particularly chapter $\underline{V}$ B "Area Image Sensors". The sensor mainly consists of a large number of adjacent charge-coupled devices, of one of which the channel 1 is shown in Fig. 1. The transport takes place from the upper to the lower side. The clock electrodes by which the charge transport is controlled are not shown in the drawing for the sake of clartiy. The mat of channels 1 is divided into a photosensitive sensor section 2 and a non-photosensitive storage section 3 screened, for example, by an Al layer from incident radiation. Below the storage section is or are situated one (or more) horizontal read-out register (s) having one (or several) outputs 5 for reading the information.

During operation, the photo currents generated by absorbed radiation are integrated during an integration period in the stages of the charge-coupled devices acting as photosensitive elements. In the drawing, one of these cells denoted by reference numberal 6 is indicated. After the end of the integration period, the generated radiation pattern is transferred as a whole to the storage section. The charge in the cell 6 is then stored in the storage site 7. This transfer takes place in a very short time period with respect to the integration period, for example during the field fly-back period in T.V. applications

In the case in which light is continuously incident upon the sensor section during the transport of the frame to the storage section, further charge will be added to the charge packet corresponding to the element 7. This charge comprises a first component originating from the picture elements above the element 6 in the part a of the channel 1 and a second component originating from the part b of the channel 1. The first component is formed during the transport of the preceding frame to the storage section and is therefore already present at the beginning of the integration period. The second component is formed after the integration period. This further charge, often designated as "smear", generally leads to a blurring of the image. In the case of local overexposure, this "smear" may lead to a whole column becoming white during the display of the image. Therefore, it is of major importance to provide the camera, when using this type of sensors, in spite of the high speed of transport with a shutter in order to prevent supply of light to the sensor during the frame transfer.

Fig. 2 shows the block circuit diagram of a camera 10 according to the invention. In the drawing, the FT sensor is represented by the block 11 provided with one output (or several outputs) 12, through which the signals can be derived on behalf of further external processing, such as, for example, with a T.V. camera, or can be passed to an internal storage medium, for example a magnetic tape. The sensor is controlled by a control circuit, which is represented by the block 13, which may be arranged in part on the same semiconductor body as the sensor 11. Between the lens system 14 and the sensor 11 is arranged an electronic shutter 15, by means of which the path of radiation 16 can be interrupted during the frame transfer, as a result of which the smear prblem described above can be avoided. The control circuit 13, which controls the time division of the image sensor device 11, also provides for the control of a voltage source 17, which supplies an alternating voltage for opening and closing the shutter 15 in synchronism with the sensor 11.

The shutter 15 is constituted by a liquid crystal cell, termed hereinafter briefly LCD cell, which is operated in a pulse mode, as described inter alia in the Netherlands Patent Application 8402864 (PHN 11.158) in the name of the Applicant laid open to public inspection. Fig. 3 shows in sectional view on an enlarged scale the cell used in the camera shown in Fig. 2. The cell 15 comprises two glass supporting plates 21 and 22. The sides of these supporting plates facing each other are provided with electrodes 23 and 24 of a conductive and transparent material, such as, for example, doped tin oxide. These eldtrodes need not consist, as in the said Application of the Applicant, of crossing strips, but may each be simply in the form of a continuous surface. The electrodes 23 and 24 are each coated with a silicon oxide layer 26,27, which constitute the orientation layers for the liquid crystal 28. The layers 26,27 are obtained by oblique vapour deposition (for example at an angle of approximately 85° to the normal), which provides for the LC molecules a tilt of approximately 30°. The upper and lower glass plates 20,21 are arranged in such a manner with repect to each other that in the absence of voltage the director direction of the LC molecules from one plate to the other rotates through 90°. The distance between the plates is approximately 6 $\mu$m and may be maintained, if desired, by spacer means not shown in the drawing. A sealing edge 29 joins the upper and lower plates together along their periphery. The cell is filled with the liquid crystal ZLI 1694 of the Company Merck, to which 0.59 % of CB 15 is added as cholesteric doping. The adiction CB 15 is marketed under this tradename by the Company BHD Chemicals and is said to consist of n-cyano-4'-(2-methyl)-isobutyl-biphenyl.

The ratio d/p between the thickness of the cell and the natural pitch of the LC molecules is in this configuration approximately 0.25. The composition of the cell is chosen so that, in combination with the voltages to be applied, very short switching times are obtained between the maximum transmission and the instant at which the background transmission is reached in the rest condition.

The outer sides of the plates 21 and 22 are each provided with a polarizer, i.e. the polarizer 30 on the plate 21 on which the light is incident and the analyser 31 on the plate 22. The polarizer 30 is parallel with the LC director direction to the wall of the glass plate 21. The analyser 31 preferably encloses an angle of 15° with the polarizer 30 because in this case the optimum results are attained.

For explanation of the operation of the device, Fig. 4a shows the diagram of voltage pulses applied

3

between the electrodes 23 and 24 by means of the source 17. Fig. 4b shows the associated transmission T of the cell 15 as a function of the time $\underline{t}$

The transmission T is then defined as

$$T = \frac{\int_{400\ nm}^{700\ nm} In(\lambda)\ R(\lambda)\ T(\lambda)\ d\lambda}{\int_{400\ nm}^{700\ nm} In(\lambda)\ R(\lambda)\ d\lambda},$$

in which $\lambda$ = the wavelength of the light,

In $(\lambda)$ = intensity curve of the spectrum of average daylight according to the CIE 1931 colour system (see AMSI/ASTM method E 308),

R $(\lambda)$ = eye sensitivity curve,

T $(\lambda)$ = transmission spectrum curve of the L.C.D.,

while a frame period corresponds to $\tau$ sec ( = integration period plus charge transfer).

For T.V. applications, $\tau$ = 20 msec for the 625 lines-50 Hz system. For the 525 lines - 60 Hz system $\tau$ = $16\frac{2}{3}$ msec. For the charge transfer during the field fly-back time (frame blanking period), about 0.5 msec is available.

In the absence of voltage at the electrodes 23,24, the cell 15 is impervious or at least substantially impervious. At t = 0 (beginning integration period), a voltage pulse of 20 V is applied,as a result of which the transmission T of the cell reaches its maximum value within a very short time. The voltage pulse at t = 0 is very short (for example 0.2 msec). During the remaining part of the frame period, the voltage across the LC cell is kept at 0 V. As a result, the transmission triggers, after having reached its maximum value, back to its - low - initial value. During the integration of charge, the transmission of the shutter 15 is therefore not constant, but decreases with the integration time. The transmission need not be constant because the light of all pixels is integrated during the same integration period. The transmission should be sufficiently high during a sufficiently long period,however. In the last 0.5 msec of the frame period (point A in Fig. 4b), the generated charge packets are transferred to the storage section. During this transfer (blanking time), the transmission should be sufficiently low.

The contrast that can be reached with the cell can be defined as:

$$CR = \frac{\int_{0}^{20\ msec} T\ dt}{\int_{19.5\ msec}^{20\ msec} T\ dt}$$

It appears from the calculations that with the cell described above a contrast of about 500 can be obtained. In practice, this value is sufficiently high to clock the frame to the storage substantially without smear.

It will be appreciated that the invention is not limited to the embodiment described herein, but that many further variations are possible for those skilled in the art without departing from the scope of the invention. Instead of configurations triggering to the non-transparent state, LCD cells may be used which are set to their low transmission state and then trigger back to their maximum transmission state. For example, LCD cells of other known chemical compositions or LCD cells having twist angles different from 90° and/or other orientating layers may be used; further, instead of LCD cells known magneto-optical cells may also be used. The invention may also be applied with the use of other types of charge-coupled image sensor devices, such as with devices of the interline type.

## Claims

1. A camera comprising a charge-coupled image sensor device having an image sensor section by which an image projected onto it during a frame period is converted into a pattern of charge packets, as well as a storage section for storing the charge packets, formed in the image sensor section during the frame period, wherein the pattern of charge packets can be transferred from the image sensor section to the storage section in a transfer period which is short as compared with the frame period, characterized in that the camera has a shutter for blocking the supply of radiation during the transfer period, this shutter comprising a liquid crystal cell or a magneto-optical cell provided with control means by which a voltage pulse can be supplied at the beginning of the frame period, as a result of which the cell is set to a transparent state and triggers during the remaining part of the frame period to the non-transparent state, and is at least substantially non-transparent during the transfer period.

2. A camera comprising a charge-coupled image sensor device having an image sensor section by which an image projected onto it during a frame period is converted into a pattern of charge packets, as well as a storage section for storing the charge packets, formed in the image sensor section during the frame period, wherein the pattern of charge packets can be transferred from the image sensor section to the storage section in a transfer period which is short as compared with the frame period, characterized in that the camera has a shutter for clocking radiation in the frame period, this shutter comprising a liquid crystal cell or a magneto-optical cell provided with control means by which at the end of the frame period a voltage pulse can be applied, as a result of which the cell is set to the non-transparent state and triggers during the remaining part of the time till the next voltage pulse back to a transparent state.

3. A camera as claimed in Claim 1 or 2, characterized in that the charge-coupled image sensor device is of the frame transfer type.

FIG.1

FIG.2

FIG.3

FIG.4a

FIG.4b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 143 103 (BURROUGHS CORP.) * Whole document * | 1,2 | H 04 N 5/335 |
| Y | IEEE TRANSACTIONS ON ELECTRON DEVICES, vol. ED-17, no. 1, January 1970, pages 22-26, New York, US; G.H. HEILMEIER et al.: "Further studies of the dynamic scattering mode in nematic liquid crystals" * Page 24, left-hand column, line 14 - page 25, right-hand column, line 10; figures 2-8 * | 1,2 | |
| Y | Idem | 1-3 | |
| Y | US-A-4 589 025 (MONAHAN et al.) * Column 3, lines 46-54; column 4, lines 6-20; column 8, lines 1-12; figures 2,3 * | 1-3 | |
| A | PATENT ABSTRACTS OF JAPAN, vol. 6, no. 25 (E-94)[903], 13th February 1982; & JP-A-56 143 769 (TOKYO SHIBAURA DENKI K.K.) 09-11-1981 * Abstract * | 1,2 | TECHNICAL FIELDS SEARCHED (Int. Cl.4) H 04 N G 02 F |
| A | INSTRUMENTS AND EXPERIMENTAL TECHNIQUES, vol. 24, no. 4, part 2, July/August 1981, pages 1028-1029, Plenum Publishing Corp., New York, US; A.A. ZHILENIS et al.: "Magnetooptical polarization modulator of pulsed laser light" * Page 1028, lines 14,15 * -/- | 1,2 | |

The present search report has been drawn up for all claims

| Place of search | Date of completion of the search | Examiner |
|---|---|---|
| THE HAGUE | 17-03-1988 | KLUZ F.M. |

European Patent Office

EUROPEAN SEARCH REPORT

Application Number

EP 87 20 2462

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | ELECTRONICS LETTERS, vol. 10, no. 7, 4th April 1974, pages 114-115, Hitchin, GB; E.P. RAYNES et al.: "Fast-switching twisted nematic electro-optical shutter and colour filter" * Abstract * | | |
| A | US-A-3 575 492 (NESTER et al.) | | |

TECHNICAL FIELDS SEARCHED (Int. Cl.4)

The present search report has been drawn up for all claims

| Place of search | Date of completion of the search | Examiner |
|---|---|---|
| THE HAGUE | 17-03-1988 | KLUZ F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)